(19)

**Europäisches Patentamt**

**European Patent Office**

**Office européen des brevets**

(11)　**EP 4 726 672 A1**

(12)　# EUROPEAN PATENT APPLICATION

(43) Date of publication:
　　**15.04.2026　Bulletin 2026/16**

(21) Application number: **24206337.8**

(22) Date of filing: **14.10.2024**

(51) International Patent Classification (IPC):
　　$G06V\ 10/772$ (2022.01)　　$G06V\ 10/764$ (2022.01)
　　$G06V\ 10/774$ (2022.01)　　$G06V\ 10/82$ (2022.01)
　　$G06N\ 3/045$ (2023.01)　　$G06V\ 10/22$ (2022.01)
　　$G06V\ 10/74$ (2022.01)

(52) Cooperative Patent Classification (CPC):
　　G06V 10/772; G06N 3/045; G06N 3/08;
　　G06V 10/235; G06V 10/761; G06V 10/764;
　　G06V 10/774; G06V 10/82

(84) Designated Contracting States:
　　**AL AT BE BG CH CY CZ DE DK EE ES FI FR GB
　　GR HR HU IE IS IT LI LT LU LV MC ME MK MT NL
　　NO PL PT RO RS SE SI SK SM TR**
　　Designated Extension States:
　　**BA**
　　Designated Validation States:
　　**GE KH MA MD TN**

(71) Applicant: **Axis AB**
　　**223 69 Lund (SE)**

(72) Inventors:
　　• **Moreau, Filip**
　　　**223 69 Lund (SE)**
　　• **Chen, Jiandan**
　　　**223 69 LUND (SE)**

(74) Representative: **AWA Sweden AB**
　　**Matrosgatan 1**
　　**Box 5117**
　　**200 71 Malmö (SE)**

Remarks:
　　Amended claims in accordance with Rule 137(2)
　　EPC.

(54)　**A METHOD AND AN IMAGE PROCESSING DEVICE FOR IDENTIFYING DEPICTED OBJECTS WHICH ARE VISUALLY SIMILAR TO REFERENCE OBJECTS**

(57)　A method for identifying objects in a set of images which are visually similar to reference objects comprises:

receiving an indication of regions where reference objects are depicted;

forming a reference pool with data records representing the reference objects;

generating a text embedding (TE) and a visual embedding (VE) for each of the reference objects, by applying neural networks to image data from the regions where the reference objects are depicted;

detecting a plurality of candidate objects in the set of images, and generating a TE and a VE for each;

approving a detected candidate object for addition to the reference pool only if the reference pool contains a reference object fulfilling a first similarity criterion ($C_1$), which depends both on TE similarity and VE similarity, in relation to the detected candidate object;

extending the reference pool by adding all approved candidate objects; and identifying a detected candidate object as visually similar to the reference objects only if the extended reference pool contains a reference object fulfilling a second similarity criterion ($C_2$), which depends on VE similarity, in relation to the detected candidate object.

*200*

| Step |
|---|
| Receive reference objects — 210 |
| Form reference pool — 211 |
| Generate TEs and VEs — 212 |
| Detect candidate objects — 213 |
| Approve for addition to reference pool — 214 |
| Form negative reference pool — 215 |
| Generate VEs — 216 |
| Approve for addition to negative reference pool — 217 |
| Extend negative reference pool — 218 |
| Extend reference pool — 219 / Select best matches — 219.1 |
| Identify visually similar objects — 220 |
| Receive user feedback — 221 |

*Fig. 2*

**Description**

**TECHNICAL FIELD**

The present disclosure relates to the field of image processing and in particular to a method and device for identifying objects in a set of images which are visually similar to reference objects. The disclosed technology is enabled by text embeddings and visual embeddings generated by a machine-learning (ML) model, and by the use of a combined textual and visual similarity criterion.

**BACKGROUND**

It is known that the availability of good and cost-efficient training data is a decisive success factor in most ML-powered technologies. Even highly innovative and well-designed ML applications may fail to reach their true potential if training data is in insufficient supply, or has an excessive cost. An ML model continues to evolve if it is exposed to new training data, but this is usually not the case if preexisting training data is used a second time.

Example visual ML-powered technologies include object detection, object recognition, image enhancement, segmentation, image intelligence and image safety. Training data for visual ML applications may take the form of a large dataset of labeled images or videos, in which the labels indicate the objects which are of interest (or which are of negative interest) to a user of the ML application. Labeling the input images or video is conventionally a manual task entrusted to a human operator, or it is based on observations, measurements or the like. While the human labeling, observations, measurements etc. are time-consuming and potentially costly activities, they are also essential for providing new training data that does not merely duplicate preexisting training data. This said, available technologies for processing the human labeling vary considerably as to the benefit they can extract from each human labeling act, and attempts are being made to maximize this benefit. On the one hand, it is desirable to maximize the *amount of* training data each human labeling act gives rise to. On the other hand, it is desirable to the *uniqueness* of this training data relative to the preexisting training data, i.e. to may it as novel and distinctive as possible relative to the preexisting training data, so as to maximize the incremental training effect.

For these reasons, it would be desirable to provide methods and devices for automatically labeling a large image dataset based on a small number of manually labeled images.

**SUMMARY**

One objective of the present disclosure is to improve the availability of labeled (or annotated) visual data suitable for training an ML model. The aimed-for improvement may relate to increasing the total amount of such training data, or it may relate to reducing the cost of the training data, or both. This may be achieved, concretely, by making available a method and an image processing device for identifying objects in a set of images which are visually similar to reference objects, which constitutes a further objective of this disclosure. Yet another objective is to make available such a method and image processing device which operate with merely a limited amount of human intervention, i.e., fully or partially automatically. Yet another objective is to make available such a method and image processing device which lend themselves to a computationally lean implementation, and/or which are competitive by requiring a modest amount of processing power and storage space. A further objective is to enable an active exclusion of undesired objects, i.e., to provide a method and image processing device for identifying objects that are visually similar to the reference objects provided that they are not visually similar to negative reference objects.

At least some of these objectives are achieved by the invention defined by the independent claims. The dependent claims relate to advantageous embodiments of the invention.

According to a first aspect of the present disclosure, there is provided a method for identifying objects in a set of images which are visually similar to reference objects. The method comprises: receiving an indication of regions in the set of images where a plurality of reference objects are depicted; forming a reference pool consisting of said plurality of reference objects, which are represented in the reference pool as data records; generating a text embedding (TE) and a visual embedding (VE) for each of the reference objects, wherein generating the TE and VE includes applying one or more neural networks to image data from the regions where the reference objects are depicted; detecting a plurality of candidate objects and generating a TE and a VE for each of these, which includes applying said one or more neural networks to image data from regions in the set of images where the candidate objects are depicted; approving a detected candidate object for addition to the reference pool only if the reference pool contains a reference object fulfilling a first similarity criterion C1, which depends both on TE similarity and VE similarity, in relation to the detected candidate object; extending the reference pool by adding all approved candidate objects; and identifying a detected candidate object (e.g., in terms of the region where it is depicted) as being visually similar to the reference objects only if the extended reference pool contains a reference object fulfilling a second similarity criterion C2, which depends on VE similarity, in relation to the detected candidate object.

It is recalled that *text embeddings* are vectors retrieved from a language model, which are generally useful for predicting what class the object belongs to. A text embedding is a numerical vector which represents a semantic or contextual description of the contents in the image, i.e., a text describing the contents of the image (e.g., the object) or describing the surroundings of this content. Text embeddings are generally invariant to pose changes of the objects, to individual variation in the appearance of the objects, and to varying light conditions. It is further recalled that *visual embeddings* are vectors generated by a deep learning model, such as a visual transformer network, wherein the vectors represent the various visual features of the object. Visual embeddings are numerical vectors which represent image features of objects, and they could be sensitive to (i.e., they could vary in response to) changes in pose, lighting condition etc.

The object identification method according to the first aspect may reach high accuracy thanks to the first similarity criterion C1, which requires both TE similarity and VE similarity. This may help avoid false positives, where two depicted objects have an apparent similarity but are in fact of distinct types, to a greater extent than with technology that relies on visual similarity only. Without sacrificing accuracy, the method according to the first aspect may thus multiply a number of human-identified reference objects into a larger quantity of unique training data. The training data generated by the method of the first aspect is unique if the identified objects are distinct from the reference objects and/or are depicted in a different visual context than the reference objects.

A further benefit of the parallel use of TE and VE similarity is that candidate objects maybe added to the reference pool even if they are not visually identical or near-identical. The extended reference pool will therefore have a more complete population of reference objects, so that the risk of misclassifying a visually similar object as not-similar (false negative) decreases.

A further benefit is that although the method of the first aspect outputs predictions of what a human viewer would regard as visually similar object, the method can be performed with a limited amount of human intervention, or none at all.

A still further benefit with the method of the first aspect is that the second similarity criterion C2, based on which the subsequent search for objects which are visually similar to the reference objects is performed, does not have a dependence on TEs. As such, once the extended reference pool has been established, there is no need to generate TEs for the subsequent candidate objects. This reduces the number of calls to the corresponding neural network, and thus helps limit the total computational load.

In some embodiments, the first similarity criterion C1 requires fulfilment of

- a first sub-criterion C1.1 that the reference object shall have at least weak TE similarity *and* at least weak VE similarity in relation to the detected candidate object; and

- a second sub-criterion C1.2 that the reference object shall have strong TE similarity *or* strong VE similarity, or both of these, in relation to the detected candidate object.

Here, the strong TE similarity represents a relatively stronger degree of similarity than the weak TE similarity, and the strong VE similarity represents a relatively stronger degree of similarity than the weak VE similarity. The inventors have obtained promising empirical results when the first similarity criterion C1 is defined along these lines.

In such implementations of the method where a TE distance is defined, the TE similarity can be quantified numerically. More precisely, the reference object shall be deemed to have at least weak TE similarity in relation to the detected candidate object if its TE distance to the detected candidate object is below a first TE threshold; the reference object shall be deemed to have strong TE similarity in relation to the detected candidate object if its TE distance to the detected candidate object is below a second TE threshold; and the first TE threshold is greater than the second TE threshold.

In such implementations of the method where a VE distance is defined, the VE similarity can be quantified numerically. More precisely, the reference object shall be deemed to have at least weak VE similarity in relation to the detected candidate object if its VE distance to the detected candidate object is below a first VE threshold; the reference object shall be deemed to have strong VE similarity in relation to the detected candidate object if its VE distance to the detected candidate object is below a second VE threshold; and the first VE threshold is greater than the second VE threshold. For example, the TE distance may be a function of cosine distance in TE space and/or the VE distance may be a function of cosine distance in VE space.

In some embodiments, the first similarity criterion and the second similarity criterion refer to representations of the TEs and VEs in latent space. Latent space refers to the one or more neural networks which generate the TE and the VE, and thus to an internal representation of the generated TE and VE. Although the meaning of elements of latent space is in general not transparent - the elements normally have to be interpreted by the associated neural network and/or translated into human-readable form - the elements can be stored and transferred in the form of bitstrings or numbers, or arrays of these. An advantage of working with latent-space representations of the TE and VE, as these embodiments provide, the TE or VE similarity can be assessed with greater accuracy. The not-preferred option of translating the TE and VE into natural language could possibly introduce ambiguity and unintentional variations which makes similarity assessments unnecessarily difficult.

In some embodiments, the method is further developed for carrying out the task of identifying objects that are visually similar to the reference objects provided that they are not visually similar to negative reference objects. The ability to input negative reference objects offers the user a way of delimiting the reference objects very accurately as regards their appearance. To achieve this, according to these embodiments of the method, a negative reference pool is formed which contains at least one reference object represented as a data record. The negative reference pool is managed differently than the (positive) reference pool discussed above, in the sense that the decision whether to add a candidate object to the negative reference pool is guided by VE similarity only. Preferably, no TE shall be generated for a negative reference object. Within these embodiments, the inventors have devised conflict resolution procedures which can be practiced in the exceptional case where the same candidate object is tentatively approved for addition to both the (positive) reference pool and the negative reference pool; this such as conflict resolution procedure will be described below.

The method of the first aspect can be implemented in a stage-wise manner, where the reference pool is extended after the step of approving candidate objects for addition to the reference pool has been completed. Further, the method can be implemented in a running manner, where candidate objects are added to the reference pool as soon as they have been approved to be added. The former category of implementations may be better suited for embodiments where a negative reference is used, whereas the load on processing and storage resources may be more even over time if the latter category of implementations is chosen.

According to a second aspect of the present disclosure, there is provided an image processing device. The image processing device comprises: an input interface for receiving a set of images and an indication of a plurality of reference objects depicted therein; a reference pool memory suitable for storing data records relating to one or more objects; one or more neural networks operable to generate a TE and a VE for an object depicted in a region of an image, based on image data from the image region; an object detection component operable to detect objects in an image; an output interface for indicating one or more objects which are visually similar to said reference objects; and processing circuitry configured to perform the above-outlined method of the first aspect.

The second aspect of the present disclosure generally shares the effects and advantages of the first aspect, and it can be implemented with a corresponding degree of technical variation.

The present disclosure further relates to a computer program containing instructions for causing a computer, or the image processing device in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

In the present disclosure, the terms neural network, ML model and artificial intelligence (AI) model are used interchangeably and synonymously, except for where the context suggests a different meaning, or a different meaning is explicitly indicated.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless this is explicitly stated.

**BRIEF DESCRIPTION OF THE DRAWINGS**

Aspects and embodiments are now described, by way of example, with reference to the accompanying drawings, on which:

figure 1 shows a fragment of a video sequence and an image processing device for automatically labeling the video sequence based on indicated regions where reference objects are depicted;

figure 2 is a flowchart of a method of identifying objects in a set of images which are visually similar to reference objects, according to embodiments herein;

figure 3 illustrates locations of TEs and VEs generated for six reference objects in a reference pool, wherein the left portion refers to TE space and the right portion refers to VE space;

figure 4 illustrates, in the same format as in figure 3, locations of TEs and VEs of ten candidate objects relative to a reference object in the reference pool, wherein the TE and VE of each candidate object have been indicated in the left and right portions using identical symbols, wherein the dashed circle around the reference object refers to a first subcriterion C1.1 (weak similarity, to be fulfilled by TE and VE) and the concentric solid circle refers to a second subcriterion C1.2 (strong similarity, to be fulfilled by TE or VE or both);

figure 5 illustrates locations of the VEs of the six original reference objects and of the added approved candidate objects;

figure 6 illustrates, in the context of an embodiment where a negative reference pool is maintained, the process of approving a candidate object for addition to the reference pool;

figure 7 illustrates, in the context of an embodiment where a negative reference pool is maintained, the process of identifying a candidate objects as being visually similar to the reference objects; and

figure 8 is a schematic view where all dimensions of TE space are symbolized by the horizontal axis and all dimensions of VE space are symbolized by the vertical axis, and which illustrates the applying of the first sub-criterion C1.1 and the second sub-criterion C1.2 to fourteen candidate objects in relation to a reference object in the reference pool.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

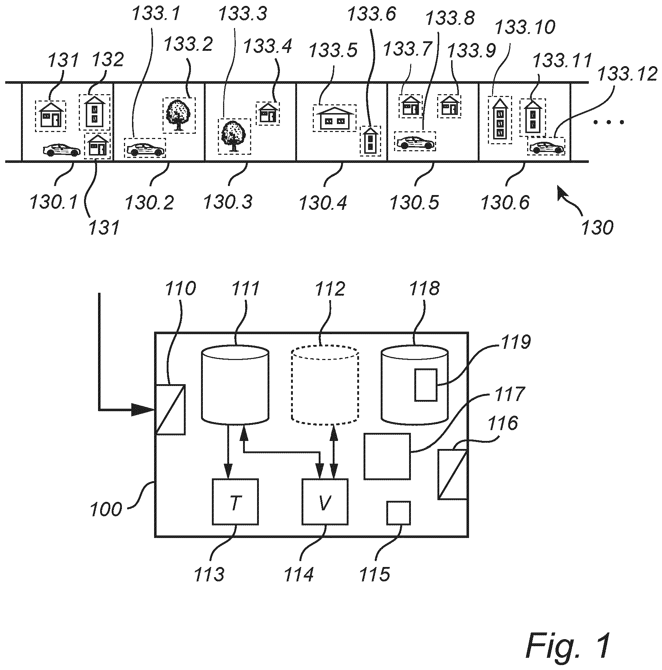

The upper portion of figure 1 shows a section of a video sequence 130 and the lower portion shows an image processing device 100 for automatically labeling the video sequence based on indicated regions where reference objects 131 are depicted. The image processing device 100 may be a standalone device, or it may be part of a multifunctional system, such as a video management system or a general-purpose computer.

The video sequence 130 is an example of a set of images 13 0.1, 130.2, 130.3, 130.4, 130.5, 130.6. The video sequence 130 may be acquired by a digital video camera, such as a video camera for a video monitoring application. The acquisition of the video sequence 130 may have stopped when it is fed to the image processing device 100, or the image processing device 100 receives the video sequence 130 as a data stream while it is being acquired. The teachings to be disclosed below are not limited to images from a particular origin, such as photographic images, but these teachings may as well be applied to drawings, paintings, computer renderings, ML-generated images and so forth.

In broad terms, the image processing device 100 is configured to accept an indication of reference objects 131 (in figure 1: one-story houses) as input data at an input interface 110, and for providing an indication of objects visually similar to the reference objects as output data at an output interface 116. The image processing device 100 may accept the input data in the form of indications of regions in the set of images where the reference objects 131 are depicted, and it may provide output data which similarly indicates certain regions 133 in the set of images where the visually similar objects are depicted (say, regions 133.4, 133.5, 133.7, 133.9 in the example of figure 1). The regions may be indicated in terms of their coordinates (e.g., bounding boxes in image coordinates) or the input and output data may refer to a fixed grid of numbered regions. The output data together with the set of images 130 may be said to constitute labeled image data (or annotated image data). In the intended use case where the labeled image data is to be used for training an ML model, particularly by deep learning or reinforcement learning, the output data may have a format compatible with the ML model already when it leaves the image processing device 100.

The operation of the image processing device 100 is coordinated by processing circuitry 117 which is operable to execute computer programs 119 in a memory 118. The processing circuitry 117 may be authorized to manage and control the further components of the image processing device 100, and to facilitate the exchange of data among these.

The image processing device 100 further comprises one or more neural networks 113, 114 operable to generate a text embedding (TE) and a visual embedding (VE) for an object depicted in a region of an image, based on image data from that image region. Figure 1 shows an embodiment where a first neural network 113 generates the TEs and a second neural network 114 generates the VEs. It is also possible to generate the TEs and the VEs by a common, multimodal neural network. According to a further alternative implementation, the neural networks 113, 114 are not comprised in the image processing device 100 but run on an external device, with which the image processing device 100 can exchange image data (outgoing) and TEs/VEs (incoming) as needed.

As mentioned above, a *text embedding* is vector retrieved from a language model, which are generally useful for predicting what class a depicted object belongs to. Example classes in the case of animals could be: mammal, fish, bird, reptile, insect. The model may be said to predict what class a human viewer would assign to the depicted object. A TE may have the form of a numerical vector which represents a semantic or contextual description of the contents in the image, i.e., a text describing the contents of the image (e.g., the object) or describing the surroundings of this content. Further, a *visual embedding* is a numerical vector generated by a deep learning model, such as a visual transformer network, wherein the vector represents the various visual features of the object. VEs are numerical vectors which represent image features of an object, and it could be sensitive to changes in pose, lighting condition etc. In a typical implementation at the time of this disclosure, a TE has a dimensionality of the order of several hundred dimensions, such as a thousand or several thousand dimensions. Similarly, VE in a typical implementation may have a thousand or several thousand dimensions. The TEs may be output from the first neural network 113 in the form of a bitstring or number that refers to the latent space of the first neural network 113, or the TEs may be in the form of statements in natural language. The following vector

$$[-0.5 \quad 0.5 \quad 1.0 \quad ... \quad 0]$$

may be a representative example appearance of a VE or a TE in latent space.

When assessing the performance of some embodiments disclosed herein, the inventors used an instance of OpenAI's image classification model CLIP, described in Radford et al., "Learning Transferable Visual Models from Natural Language Supervision", preprint, arXiv:2103.00020 [cs.CV] as the first neural network 113. As the second neural network 114, the inventors used a Google Research's Vision Transformer, ViT, described in Dosovitskiy et al., "An Image is Worth 16×16 Words: Transformers for Image Recognition at Scale", preprint, arXiv:2010.11929 [cs.CV]. The CLIP model may be available as a component within Facebook Research's object detection model DETIC, which has functionalities for detecting objects and generating TEs; see Zhou et al., "Detecting Twenty-thousand Classes using Image-level Supervision", preprint, arXiv:2201.02605 [cs.CV]. The inventors used CLIP and ViT with their pretrained weights.

As a possible alternative to CLIP, the first neural network 113 may be selected as the open-vocabulary object detection model OV-DETR, described in Zang et al., "Open-Vocabulary DETR with Conditional Matching", preprint, arXiv:2203.11876 [cs.CV]. The first neural network 113 may alternatively be selected as EdaDet, described in Shi et al., "EdaDet: Open-Vocabulary Object Detection Using Early Dense Alignment", preprint published at https://chengshiest. github.io/edadet. Further, as a possible alternative to ViT, the second neural network 114 may be selected as DINOv2, described in Oquab et al., "DINOv2: Learning Robust Visual Features without Supervision", preprint, arXiv:2304.07193 [cs.CV], as a Swin Transformer, described in Liu et al., "Swin Transformer: Hierarchical Vision Transformer using Shifted Windows", preprint, arXiv:2103.14030 [cs.CV], or as a suitably trained convolutional neural network (CNN).

The image processing device 100 further comprises a reference pool memory 111 suitable for storing data records relating to one or more objects which are depicted in images. As used herein, a data record may be an instance of a simple data type, a vector/array of simple data types, a database item, or another suitable data structure. The reference pool memory 111 in operation may contain one data record for each object (e.g., an array of that object's TE and VE can be used) or it may contain several data records (e.g., one data record for TE and one data record for VE) that carry a common object identifier. Each of these two alternatives allows the object's TE and the VE to be considered together when assessing the similarity of the object relative to another object. Preferably, a TE shall not be stored in a separate data record in the reference pool memory 111 separated from the same object's data record with the VE, unless the two data records are provided with an object identifier or some equivalent means that allows tracing the TE back to the corresponding VE and assessing the object's TE similarity and VE similarity jointly.

The image processing device 100 further comprises an object detection component 115 operable to detect objects in an image. The object detection component 115 may be ML-based or conventional, according to per se known techniques. As described above, in implementations where the model DETIC is used, it may act both as the first neural network 113 and as the object detection component 115.

Optionally, in some embodiments, the image processing device 100 accepts further input data which indicates negative reference objects 132 (in figure 1: multi-story houses), and it is configured to provide output data that indicates objects which are visually similar to the reference objects but not visually similar to the negative reference objects 132. In the example of the upper portion of figure 1, it may be relatively easy to exclude those regions 133.1, 133.2, 133.3, 133.8, 133.12 that contain depictions of trees and vehicles, indeed since they are not visually similar to a house, no matter how many stories the house has. Since however it may be relatively harder to avoid reporting the regions 133.6, 133.10, 133.11 that contain multi-story houses, the ability to provide negative reference objects 132 may be helpful to distinguish one-story houses from multi-story houses. The negative reference objects 132 may be held in a negative pool memory 112, which is an optional component of the image processing device 100, in the form of data records that includes a VE for each negative reference object 132. Details of the processing for achieving these benefits will be described in detail below.

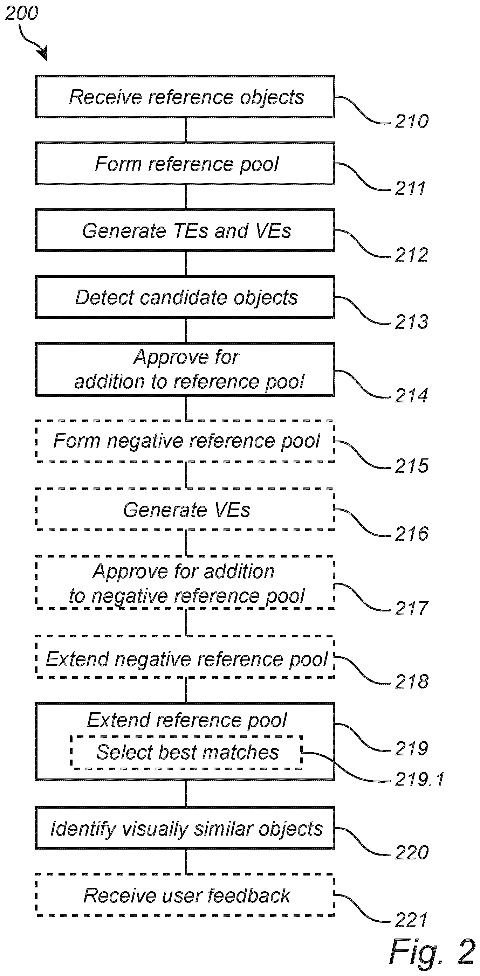

Returning to the basic embodiment of the image processing device 100, its behavior during operation will now be described in terms of a method 200 of identifying objects in a set of images which are visually similar to reference objects, and with reference to the flowchart in figure 2. More generally, the method may be performed by any general-purpose computer which has at its disposal - or can make calls to - neural networks 113, 114 for generating TEs and VEs based on image data. Machine-readable instructions for performing the method 200 may be provided in the form of a computer program 119 or a script.

The stages of the method 200 will be referred to herein as "steps", although the execution of two or more steps may overlap in time or overlap partially in time. The dashed-line boxes of the flowchart in figure 2 correspond to optional steps, which are not necessarily part of all embodiments of the method 200. For example, if the image processing device 100 is modified to accept further input data which indicates negative reference objects 132, this may correspond to adding steps 215, 216, 217 and 218 to the corresponding method 200.

In a first step 210, the entity executing the method 200 receives indications of reference objects 131. Specifically, the reference objects 131 may be received in the form of indications of regions in the set of images 130 where the reference objects are depicted. The received indications of the reference objects 131 may correspond to a human's labeling of an image (ground truth), and an overreaching aim of the method 200 is to find further objects which are visually similar to the reference objects 131. It has been observed that the method 200 performs better in some circumstances if the reference objects 131 are more similar, e.g., if, from the point of view of the TEs, they belong to a common object class or to mutually similar object classes. This said, the method 200 can be carried out regardless of reference objects' 131 cognitive significance to the human who was in charge of the labeling (e.g., object of interest).

In a second step 211, a reference pool is formed, which consists of the reference objects 131 - those that were received in step 210 - represented as data records. The reference pool can be represented in any suitable data-readable form which allows adding new reference objects and reading their associated data as needed. Forming the reference pool may thus correspond to instantiating data records for the reference objects 131 and storing these in the pool memory 111.

In a third step 212 of the method 200, TEs and VEs for the reference objects 131 are generated using one or more neural networks 113, 114, which are applied to image data from the regions where the reference objects 131 are depicted. For example, the first neural network 113 can be used for generating the TEs and the second neural network 114 for generating the VEs. The thus generated TEs and VEs are added to the data records in the reference pool. As mentioned, the TE and VE of one reference object 131 may be stored within a common data record, or the TE and VE of one reference object 131 may be stored in two different data records which carry an identifier of the object. The second and third steps 211-212 can be executed jointly, such that the data record for a reference object 131 is instantiated only after the object's TE and VE have been generated; this skips an intermediary stage during which the new data record is empty.

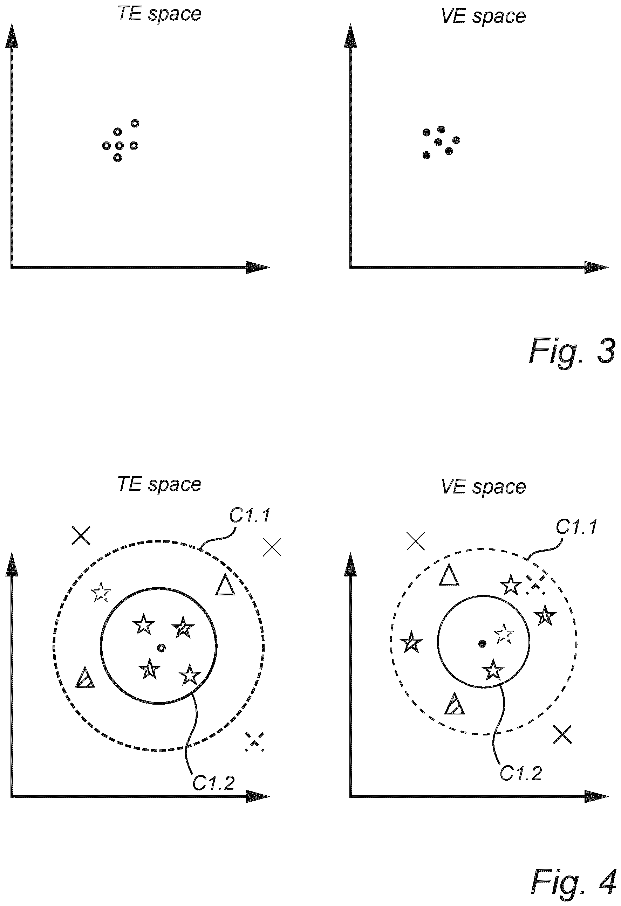

Figure 3 illustrates locations of TEs and VEs generated for six reference objects in a reference pool, wherein the left subfigure refers to TE space and the right subfigure refers to VE space. Figure 3 shows two-dimensional TE and VE spaces, and it is thus considerably simplified compared to the example dimensionality values discussed above.

In a fourth step 213, a plurality of objects are detected in the set of images 130, and a TE and a VE for each of these are generated. The detected objects are referred to as candidate objects. The detection of the candidate objects may be performed by means of an object-detection algorithm, and the algorithm can be executed by the object detection component 115. The object-detection algorithm may for example be an implementation of Faster R-CNN, described in Ren et al., "Faster R-CNN: Towards Real-Time Object Detection with Region Proposal Networks", preprint ar-Xiv:1506.01497 [cs.CV]. Alternatively, the object-detection algorithm may be selected as a single-shot detector, such as a YOLO model. The output of the object-detection algorithm may correspond to all regions 133 in set of images 130 shown in figure 1. Step 213 may include applying said one or more neural networks 113, 114 to image data from regions in the set of images where the candidate objects are depicted, for thereby obtaining the TEs and VEs.

In a fifth step 214, it is assessed whether a detected candidate object shall be approved for addition to the reference pool. The detected candidate object shall be approved only if the reference pool contains a reference object 131 fulfilling a first similarity criterion C1 in relation to the detected candidate object, wherein the first similarity criterion C1 depends both on TE similarity and VE similarity. The similarity criterion C1 may correspond to a Boolean function

IS_SIMILAR_C1(object1, object2),

which is true-valued if object1 fulfils the first similarity criterion C1 in relation to object2, wherein the output of the function depends on both the TEs and the VEs of object1 and object2. Accordingly, step 214 may include searching in the reference pool for a reference object 131 which fulfils the first similarity criterion C1. Because both TE similarity and VE similarity are taken into account by the first similarity criterion C1, step 214 may lead to approving even visually somewhat dissimilar objects for addition to the reference pool, such as the differently shaped one-story house in region 133.5. This fact advantageously broadens the basis for identifying visually similar objects in step 220.

In some embodiments of the method 200, the first similarity criterion C1 requires contemporaneous fulfilment of

- a first sub-criterion C1.1 that the reference object shall have at least weak TE similarity *and* at least weak VE similarity in relation to the detected candidate object; and

- a second sub-criterion C1.2 that the reference object shall have strong TE similarity *or* strong VE similarity, or both of these, in relation to the detected candidate object.

It is emphasized that the same reference object shall be used for evaluating both the first and the second sub-criterion. The alternative of performing a TE-oriented reference object search and an independent VE-oriented reference object search may lead to false conclusions. The respective TEs of the one-story house in region 133.5 and the reference object 131 may be strongly similar (e.g., "one-family house", "low house", "vacation home", "one-floor house", "single-story building", "cottage", "cabin", "shack" when translated into natural language) and the similarity may be even more evident in the latent space of the first neural network 113. When this formulation of the first similarity criterion C1 is enforced, the strong TE similarity overrules the fact that the two houses 131 and 133.5 have just a slight visual similarity at first sight.

Figure 4 illustrates, in the same format as in figure 3, locations of TEs and VEs of ten candidate objects relative to a reference object in the reference pool, wherein the TE and VE of each candidate object have been indicated in the two subfigures using identical symbols. The dashed circle around the reference object refers to the first sub-criterion C1.1 (weak similarity, to be fulfilled by TE and VE) and the concentric solid circle refers to the second sub-criterion C1.2 (strong similarity, to be fulfilled by TE or VE or both). In respect of the reference object shown in figure 4, it is seen that the candidate objects corresponding to the cross-shaped symbols are immediately excluded, as they do not fulfil weak similarity for both TE and VE. The candidate objects corresponding to the triangle-shaped symbols are excluded as well, for none of them fulfils strong similarity, whether for TE or VE. The object corresponding to the star-shaped symbols, however, meet both the first sub-criterion C1.1 and the second sub-criterion C1.2, and they will be approved for addition to the reference pool.

The first sub-criterion C1.1 may correspond to a Boolean function IS_SIMILAR_C11(object1, object2),

and the second sub-criterion C1.2 may correspond to Boolean function IS_SIMILAR_C12(object1, object2), wherein the output of these Boolean functions depends on both the TEs and the VEs of object1 and object2. This may be expressed as follows in formulas:

IS_SIMILAR_C1(object1, object2) = IS_SIMILAR_C11(object1, object2) && IS_SIMILAR_C12(object1, object2),

where IS_SIMILAR_C11(object1, object2) = IS_SIMILAR_TE-WEAK(object1, object2) && IS_SIMILAR_VE-WEAK(object1, object2), and IS_SIMILAR_C12(object1, object2) = IS_SIMILAR_TE-STRONG(object1, object2) ‖ IS_SIMILAR_VE-STRONG(object1, object2)

where ‖ denotes the logical (non-exclusive) OR operator and where && denotes the logical AND operator. In these expressions, the strong TE similarity represents a relatively stronger degree of similarity than the weak TE similarity, and the strong VE similarity represents a relatively stronger degree of similarity than the weak VE similarity. In other words, any pair of objects which are strongly TE-similar are also weakly TE-similar, and any pair of objects which are strongly VE-similar are also weakly VE-similar, but the inverse of each implication is false.

The Boolean IS_SIMILAR functions may be based on any suitable similarity measure, such as cosine similarity, Euclidean distance, Hamming distance, correlation, SimRank and the like. The entity executing the method 200 need not be aware of the explicit definition of the IS_SIMILAR function. The evaluation of an IS_SIMILAR function for two objects may be offered as a service by an external entity, or it may be carried out by a ML model which has been trained to predict whether the objects are (strongly, weakly) similar or not.

If the TEs and VEs take values in an inner-product space or a metric space, then a corresponding TE distance function $d_{TE}(\boldsymbol{TE_1}, \boldsymbol{TE_2})$ and a VE distance function $d_{VE}(\boldsymbol{VE_1}, \boldsymbol{VE_2})$ can be defined, where $\boldsymbol{TE_1}, \boldsymbol{TE_2}, \boldsymbol{VE_1}, \boldsymbol{VE_2}$ denote TE and VE vectors of object1 and object2, respectively. The TE distance function may for example be cosine distance or Euclidean distance (L2 norm) in the TE space. Similarly, the VE distance function may for example be cosine distance or Euclidean distance in the VE space. The cosine distance of two TE vectors may be defined as a function of cosine similarity $S_C(\boldsymbol{TE_1}, \boldsymbol{TE_2})$, as follows:

$$D_C(\boldsymbol{TE_1}, \boldsymbol{TE_2}) = 1 - S_C(\boldsymbol{TE_1}, \boldsymbol{TE_2}) = 1 - \frac{\boldsymbol{TE_1} \cdot \boldsymbol{TE_2}}{\|\boldsymbol{TE_1}\| \|\boldsymbol{TE_2}\|}.$$

In the expression on the right-hand side, the numerator is an inner product of the TE vectors and the denominator a product of their norms. The Euclidean distance of two TE vectors may be defined as

$$\|TE_2 - TE_1\| = \sqrt{\sum_i \left(TE_2(i) - TE_1(i)\right)^2},$$

where $TE_j(i)$ denotes the $i^{th}$ component of the vector $TE_j$. The cosine distance and Euclidean distance of two VE vectors may be defined similarly.

When TE and VE distance functions are available, the condition of weak and strong TE/VE similarity can be expressed numerically in terms of thresholds:

- Weak TE similarity: $d_{TE}(TE_1, TE_2) \leq \alpha_{TE}$
- Strong TE similarity: $d_{TE}(TE_1, TE_2) \leq \beta_{TE}$
- Weak VE similarity: $d_{VE}(VE_1, VE_2) \leq \alpha_{VE}$
- Strong VE similarity: $d_{VE}(VE_1, VE_2) \leq \beta_{VE}$

Here, $\alpha_{TE}$, $\beta_{TE}$ denote first and second TE thresholds which are configured in view of the data at hand and the characteristics of the TEs, and such that $\alpha_{TE} > \beta_{TE}$. Similarly, the first and second VE thresholds shall be set such that $\alpha_{VE} > \beta_{VE}$.

When the TE and VE distance functions are available, the search in the reference pool for a reference object 131 which fulfils the first similarity criterion C1 may be limited to a neighborhood in TE space of the candidate object's TE and/or to a neighborhood in VE space of the candidate object's VE. This economizes the processing resources spent on searching.

When the TE and VE distance functions are available, the first sub-criterion C1.1 and the second sub-criterion C1.2 may be expressed in terms of a common p-distance function $d^{(p)}$, which depends on the $L^p$ norm of the TE and VE distances:

$$d^{(p)}(object1, object2) = \left\|\left(d_{TE}(TE_1, TE_2), d_{VE}(VE_1, VE_2)\right)\right\|_p$$

$$= (d_{TE}(TE_1, TE_2)^p + d_{VE}(VE_1, VE_2)^p)^{\frac{1}{p}}$$

More generally, the p-distance function $d^{(p)}$ can give different importance to the TE similarity and the VE similarly if a nonhomogeneous relative weighting factor $\eta > 0$ is introduced, as follows:

$$d^{(p)}(object1, object2) = \left\|\left(d_{TE}(TE_1, TE_2), \eta d_{VE}(VE_1, VE_2)\right)\right\|_p$$

$$= (d_{TE}(TE_1, TE_2)^p + \eta^p d_{VE}(VE_1, VE_2)^p)^{\frac{1}{p}}$$

In terms of the p-distance function $d^{(p)}$, the first sub-criterion C1.1 corresponds to

$$d^{(\infty)}(object1, object2) \leq \theta_{11}$$

and the second sub-criterion C1.2 corresponds to

$$d^{(p)}(object1, object2) \leq \theta_{12}$$

for some $0 < p < 1$. It is recalled that the $L^\infty$ norm can be interpreted as a maximum norm, so that both components $d_{TE}$ and $d_{VE}$ have to be below $\theta_{11}$. Further, $L^p$ norms with $p < 1$ tolerate a larger deviation in one component if the other component is small, and vice versa. When defined in terms of the p-distance function the second sub-criterion C1.2 allows the components $d_{TE}$ and $d_{VE}$ to compensate each other mutually; this may be an advantageous alternative to testing component $d_{TE}$ against one threshold in a Boolean manner and testing the component $d_{VE}$ against another threshold.

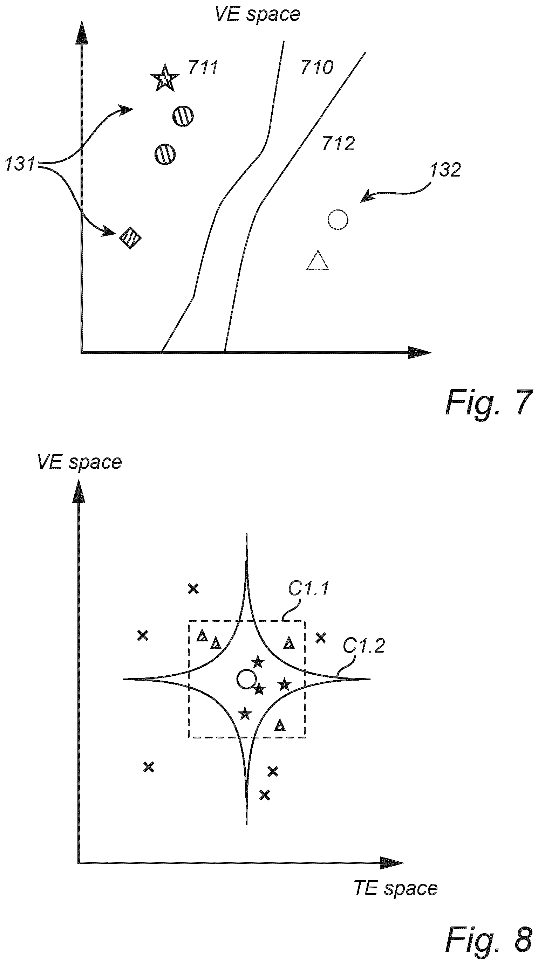

Figure 8 is a schematic view where all dimensions of TE space are symbolized by the horizontal axis and all dimensions of VE space are symbolized by the vertical axis. Figure 8 illustrates the applying of the first sub-criterion C1.1 and the second sub-criterion C1.2, when formulated in terms of the p-distance function $d^{(p)}$, to fourteen candidate objects in relation to a reference object in the reference pool. The second sub-criterion C1.2 has been defined using $d^{(0.4)}$.

After the completion of step 214, a number of detected candidate objects have been approved for addition to the reference pool while others have not. In a subsequent step 219, the reference pool is extended by adding these approved candidate objects. This may include adding data records for the approved candidate objects to the reference pool. The added approved candidate objects will be referred to as reference objects. The resulting condition of the reference pool may be referred to as an extended reference pool.

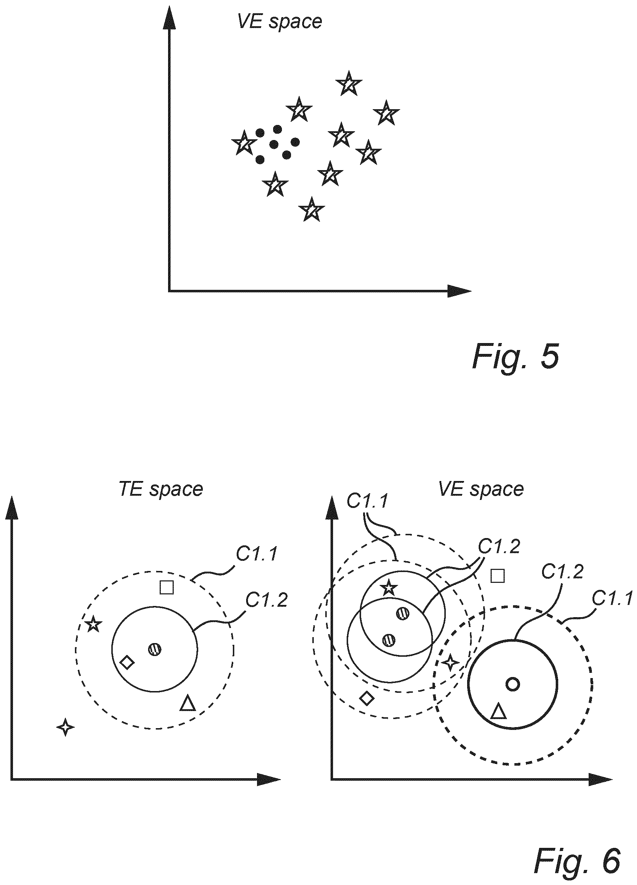

Figure 5 illustrates locations of the VEs of the six original reference objects (filled circles) and of the added approved candidate objects (stars). Again, figure 5 is greatly simplified, recalling that the dimensionality of VE space is of the order of 100 or 1000.

In some implementations of the method 200, all approved candidate objects are added all at once, i.e., step 219 is executed after step 214 has completed. In other implementations, the approved candidate objects are added while the detected candidate objects are being assessed as to their compliance with the first similarity criterion C1, i.e., during the execution of step 214. Even according to the second alternative, the search in the reference pool for a reference object 131 which fulfils the first similarity criterion C1 shall be restricted to the original reference objects 131, while the subsequently added candidate objects are to be disregarded; this may be achieved by adding a timestamp or flag to the corresponding data records in the extended reference pool.

Step 219 can optionally include a substep 219.1 of selecting the best few matches among the approved candidate objects. For example, a preconfigured number N of approved candidate objects can be selected. The remaining approved candidate objects will not be added to the reference pool. These candidate objects, which were not selected in substep 219.1, can either be discarded, or they can be reported as objects visually similar to the reference objects 131 in output data of the method 200. A candidate object which has been discarded in substep 219.1 may either be permanently removed from consideration, or it may be processed as a candidate object in step 220 on the basis of the extended reference pool.

Within substep 219.1, finding the best matches may correspond to finding those candidate objects which have the relatively smallest TE distance $d_{TE}$ to a reference object in the reference pool, or it may correspond to finding those candidate objects which have the relatively smallest TE distance $d_{TE}$ and VE distance $d_{VE}$ to a reference object in the reference pool. In a preferred embodiment, substep 219.1 includes selecting those candidate objects which have the relatively smallest TE distance $d_{TE}$ to a reference object in the reference pool while ensuring that no pair of objects in the extended reference pool have a too large VE distance. A constructive algorithm for selecting N candidate objects with this property may proceed as follows: (i) Find those $N_1$ candidate objects such that each has one of the $N_1$ relatively smallest values of the TE distance $d_{TE}$ to some reference object in the reference pool. (ii) Find those $N - N_1$ candidate objects which has one of the $N - N_1$ relatively greatest values of the maximum TE distance to another object in the reference pool or to a candidate object approved in step 219. (iii) Discard the found $N - N_1$ candidate objects. Alternatively, the operation (ii) may include comparing the maximum TE distance with a preconfigured distance threshold.

In a step 220, a detected candidate object is identified as being visually similar to the reference objects 131 only if the extended reference pool contains a reference object fulfilling a second similarity criterion C2, which depends on VE similarity, in relation to the detected candidate object. Preferably, the second similarity criterion C2 is independent of TE similarity. Accordingly, there is no need to generate a TE for the candidate objects that are to be processed after the extended reference pool has been established (after step 219).

Within step 220, the second similarity criterion C2 may correspond to the strong VE similarity within the second sub-criterion C1.2 discussed above. If a VE distance $d_{VE}$ is defined, having strong VE similarity in relation to the detected candidate object may correspond to having a VE distance to the detected candidate object which is below the second VE threshold $\beta_{VE}$. It is also possible to configure a third VE threshold $\gamma_{TE}$ for use specifically in step 220, wherein the third VE threshold is comprised between the first VE threshold and the second VE threshold: $\alpha_{VE} > \gamma_{VE} > \beta_{VE}$.

The candidate objects which fulfil the test in step 220 will be reported as output of the method 200, i.e., as objects visually similar to the reference objects. The output may further include the candidate objects which have been approved for addition in step 214 (and which may then have been added to the reference pool). In the example of figure 1, these objects may be expected to be those depicted in regions 133.4, 133.5, 133.7, 133.9.

In a typical use case, the entity executing the method 200 receives an indication of approximately ten reference objects 131 (step 210), it extends the reference pool with ten or some tens of candidate objects (step 219), and it may then apply the second similarity criterion C2 to a theoretically unlimited number of further candidate objects in the set of images 130 (step 220). Accordingly, step 214 therefore need not be applied to all detected candidate objects but can be interrupted once a sufficient number of candidate object have been approved for addition to the reference pool. A still further possibility is to extend the reference pool on one or more further occasions, after which the execution of step 220 is resumed.

A further development of the method 200 allows identifying objects that are visually similar to the reference objects provided that they are not visually similar to negative reference objects 132. As mentioned, the provision of negative reference objects 132 may help avoid false positives, such as the multi-story houses depicted in regions 133.6, 133.10, 133.11 in figure 1, which resemble the reference objects 131 by repeating some of their visual patterns, yet have a different overall geometry. According to this further development, step 210 further includes receiving an indication of regions in the set of images where at least one negative reference object 132 is depicted.

The method 200 according to the further development further comprises a step 215 of forming a negative reference pool consisting of at least one negative reference object 132, which is represented in the negative reference pool (e.g., in the negative reference pool memory 112) as at least one data record.

In a step 216, a VE is generated for each of the negative reference objects. This may include applying the second neural network 114 to image data from the regions where the negative reference objects 132 are depicted.

In a step 217, it is assessed, for each of the candidate objects which were detected in step 213, whether the negative reference pool contains a negative reference object 132 which has a strong VE similarity in relation to the detected candidate object. Said strong VE similarity can mean having a TE distance below the second VE threshold, that is $d_{VE}(VE_1, VE_2) \leq \beta_{VE}$. If this is true, that candidate object is approved for addition to the negative reference pool. In the example of figure 1, at least the two-story houses in regions 133.6 and 133.11 are likely to be approved for addition to the negative reference pool, and possibly the three-story house 133.10 as well. As explained above, step 214 need not be applied to all detected candidate objects but can be interrupted once a sufficient number of candidate object have been approved for addition to the negative reference pool.

Figure 6 illustrates, in the context of the further development of the method 200 where the negative reference pool is maintained, the process of approving a candidate object for addition to the reference pool. Figure 6 is simplified in the sense that the positive and negative reference pools in a realistic implementation may contain significantly more positive and negative reference objects. Within the approval process, the negative reference object is compared with the negative reference objects in the pool 132 only as regards its VE. In the VE space portion of figure 6, the hollow circle represents a negative reference object in the negative reference pool, and the two circles with diagonal hashing represent two reference objects in the (positive) reference pool. The solid circles around the positive and negative reference elements correspond to strong VE similarity, and the concentric dashed circles correspond to weak VE similarity. The TE space portion of figure 6 shows that the two reference objects in the (positive) reference pool have coinciding or near-coinciding TEs. By joint inspection of the TE and VE spaces, it can be concluded that the candidate object represented by the triangle-shaped symbol will be approved for addition to the negative reference pool. The candidate object represented by a five-pointed star symbol will be approved for addition to the positive reference pool. The remaining candidate objects will not be approved for addition to either of the reference pools.

In a next step 218, the negative reference pool is extended by adding the candidate objects that have been approved in step 217. The resulting condition may be referred to as an extended negative reference pool.

With the extended (positive) reference pool and the extended negative reference pool available, step 220 includes identifying a detected candidate object as being visually similar to the reference objects unless the extended negative reference pool contains a negative reference object fulfilling a third similarity criterion C3, which depends on VE similarity, in relation to the detected candidate object. It is now very unlikely that the multi-story houses depicted in regions 133.6, 133.10, 133.11 in figure 1 will be reported as visually similar to the reference objects 131. An expected output of the method according to this further development consists of the regions 133.4, 133.5, 133.7 and 133.9.

Preferably, the third similarity criterion C3 is independent of TE similarity. The third similarity criterion C3 may correspond to the strong VE similarity within the second sub-criterion C1.2 discussed above. If a VE distance is defined, having strong VE similarity in relation to the detected candidate object may correspond to having a VE distance to the detected candidate object which is below the second VE threshold $\beta_{VE}$. For the purposes of the third similarity criterion C3, it is furthermore possible to configure a fourth VE threshold $\delta_{TE}$ for use specifically in step 220 and on negative reference objects. The fourth VE threshold may be less than the above-discussed first VE threshold $\alpha_{VE}$. The fourth VE threshold may be comprised between the first and the second VE thresholds: $\alpha_{VE} > \delta_{VE} > \beta_{VE}$. The fourth VE threshold may be less than or greater than the third VE threshold $\gamma_{VE}$. A still further alternative is to set the fourth VE threshold smaller than the second VE threshold, $\beta_{VE} > \delta_{VE}$, which is likely to ensure that rejection of a candidate object on the ground of similarity with the negative reference pool remains exceptional.

Figure 7 is a plot of VE space which illustrates the process of identifying candidate objects as being visually similar to the reference objects when step 220 is executed in accordance with the present further development of the method 200. The (positive) reference objects 131 in the extended reference pool are represented by symbols with diagonal hashing, whereas the *negative* reference objects 132 in the extended *negative* reference pool are shown as dashed hollow symbols. Assuming for simplicity that this is the entire content of the extended positive and negative reference pools, one may identify the following regions of the VE space:

- A positive region 711, which is a neighborhood of all (positive) reference objects 131: A candidate object for which the VE lies in this region 711 shall be identified as visually similar to the reference objects.

- A negative region 712, which is a neighborhood of all negative reference objects 132: A candidate object for which the VE lies in this region 712 shall be identified as not visually similar to the reference objects.

- An undecided region 710, which may be taken as the complement of the positive region 711 and the negative region 712: No decision shall be taken in respect of a candidate object for which the VE lies in this region 710. Either that candidate object is omitted from further consideration, or an additional assessment is carried out to ascertain whether it is to be deemed visually similar or not.

If the VE is associated with a distance function $d_{VE}$, the distance function can be used to define the two neighborhoods, e.g., by requiring that all points in VE space which have a distance of at most $D$ units from the VE of any of the (positive) reference objects shall be included in the positive region 711.

The method 200 according to this further development may include an optional final step 221, in which a (human) user is asked to review the correctness of the outputs of the preceding steps, i.e., the objects which have been identified as visually similar to the reference objects on the basis of the positive and negative reference pools. The user can indicate objects that are not similar and thus misclassified (false positives), and these objects will be added to the negative reference pool. When step 220 is executed in respect of subsequent candidate objects, the risk of repeating the same or similar false positives will be considerably reduced.

With reference to the above-described step 217, the following conflict resolution procedure may optionally be applied if a detected candidate object has been approved (step 214) for addition to the reference pool and if the negative reference pool contains a negative reference object fulfilling the third similarity criterion C3. Then, in step 217, the detected candidate object shall not be approved for addition to the negative reference pool and the approval for addition to the reference pool shall be revoked. By these actions, the candidate object which was at risk of being approved for addition to both the positive and the negative reference pool shall not be added to either of the reference pools.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A method (200) for identifying objects in a set of images (130) which are visually similar to reference objects (131), the method comprising:

   receiving (210) an indication of regions in the set of images where a plurality of reference objects are depicted;
   forming (211) a reference pool (111) consisting of said plurality of reference objects (131), which are represented in the reference pool as data records;
   generating (212) a text embedding (TE) and a visual embedding (VE) for each of the reference objects, wherein generating the TE and VE includes applying one or more neural networks (113, 114) to image data from the regions where the reference objects are depicted;
   detecting (213) a plurality of candidate objects and generating a TE and a VE for each of these, which includes applying said one or more neural networks (113, 114) to image data from regions in the set of images where the candidate objects are depicted;
   approving (214) a detected candidate object for addition to the reference pool only if the reference pool contains a reference object fulfilling a first similarity criterion (C1), which depends both on TE similarity and VE similarity, in relation to the detected candidate object;
   extending (219) the reference pool by adding all approved candidate objects; and
   identifying (220) a detected candidate object as being visually similar to the reference objects only if the extended reference pool contains a reference object fulfilling a second similarity criterion (C2), which depends on VE similarity, in relation to the detected candidate object.

2. The method (200) of claim 1, wherein the first similarity criterion (C1) requires fulfilment of

   - a first sub-criterion (C1.1) that the reference object (131) shall have at least weak TE similarity and at least weak VE similarity in relation to the detected candidate object; and
   - a second sub-criterion (C1.2) that the reference object shall have strong TE similarity or strong VE similarity, or both of these, in relation to the detected candidate object,

   wherein said strong TE similarity represents a relatively stronger degree of similarity than said weak TE similarity, and said strong VE similarity represents a relatively stronger degree of similarity than said weak VE similarity.

3. The method (200) of claim 2, wherein:

the reference object shall be deemed to have at least weak TE similarity in relation to the detected candidate object if its TE distance to the detected candidate object is below a first TE threshold;
the reference object shall be deemed to have strong TE similarity in relation to the detected candidate object if its TE distance to the detected candidate object is below a second TE threshold; and
the first TE threshold is greater than the second TE threshold.

4. The method (200) of claim 2 or 3, wherein:

the reference object shall be deemed to have at least weak VE similarity in relation to the detected candidate object if its VE distance to the detected candidate object is below a first VE threshold;
the reference object shall be deemed to have strong VE similarity in relation to the detected candidate object if its VE distance to the detected candidate object is below a second VE threshold; and
the first VE threshold is greater than the second VE threshold.

5. The method (200) of claim 3 or 4, wherein the TE distance is a function of cosine distance in TE space and/or the VE distance is a function of cosine distance in VE space.

6. The method (200) of any of the preceding claims, wherein the first similarity criterion and the second similarity criterion refer to representations of the TEs and VEs in latent space.

7. The method (200) of any of claims 2 to 5, which is for identifying objects that are visually similar to the reference objects provided that they are not visually similar to negative reference objects (132), the method further comprising:

forming (215) a negative reference pool (112) consisting of at least one negative reference object (132), which is represented in the negative reference pool as at least one data record;
generating (216) a VE for each of the negative reference objects, which includes applying said one or more neural networks (113, 114) to image data from the regions where the negative reference objects are depicted;
approving (217) a detected candidate object for addition to the negative reference pool only if the negative reference pool contains a negative reference object which has a strong VE similarity in relation to the detected candidate object; and
extending (218) the negative reference pool by adding all approved candidate objects,
wherein a detected candidate object shall be identified (220) as being visually similar to the reference objects unless the extended negative reference pool contains a negative reference object fulfilling a third similarity criterion (C3), which depends on VE similarity, in relation to the detected candidate object.

8. The method (200) of claim 7, wherein, if a detected candidate object has been approved (214) for addition to the reference pool (111) and if the negative reference pool (112) contains a negative reference object fulfilling the third similarity criterion, then this detected candidate object shall not be approved (217) for addition to the negative reference pool and the approval (214) for addition to the reference pool shall be revoked.

9. The method (200) of any of the preceding claims, wherein the second similarity criterion (C2) and, as the case may be, the third similarity criterion (C3) are independent of TE similarity.

10. The method (200) of any of the preceding claims, wherein each visually similar candidate object is identified (220) in terms of an indication of the region where it is depicted.

11. The method (200) of any of the preceding claims, wherein the detection (213) of the candidate objects is performed by means of an object-detection algorithm.

12. The method (200) of any of the preceding claims, wherein the extension (219) of the reference pool is performed after completion of the approving (214) for addition to the reference pool.

13. The method (200) of any of the preceding claims, wherein the approving (214) for addition to the reference pool and the extension (219) of the reference pool are performed concurrently.

14. An image processing device (100) comprising:

an input interface (110) for receiving a set of images (130) and an indication of regions in the set of images where a plurality of reference objects (131) are depicted;
a reference pool memory (111) suitable for storing data records relating to one or more objects;
one or more neural networks (113, 114) operable to generate a text embedding (TE) and a visual embedding (VE) for an object depicted in a region of an image, based on image data from the image region;
an object detection component (115) operable to detect objects in an image;
an output interface (116) for indicating one or more objects which are visually similar to said reference objects; and
processing circuitry (117) configured to perform the method (200) of any of claims 1 to 13.

15. A computer program (119) comprising instructions which, when the program is executed by a computer, cause the computer to carry out the method (200) of any of claims 1 to 13.

**Amended claims in accordance with Rule 137(2) EPC.**

1. A method (200) for identifying objects in a set of images (130) which are visually similar to reference objects (131), the method comprising:

receiving (210) an indication of regions in the set of images where a plurality of reference objects are depicted;
forming (211) a reference pool (111) consisting of said plurality of reference objects (131), which are represented in the reference pool as data records;
generating (212) a text embedding (TE) and a visual embedding (VE) for each of the reference objects, wherein generating the TE and VE includes applying one or more neural networks (113, 114) to image data from the regions where the reference objects are depicted;
detecting (213) a plurality of candidate objects in the set of images and generating a TE and a VE for each of these, which includes applying said one or more neural networks (113, 114) to image data from regions in the set of images where the candidate objects are depicted;
approving (214) a detected candidate object for addition to the reference pool only if the reference pool contains a reference object fulfilling a first similarity criterion (C1), which requires both TE similarity and VE similarity, in relation to the detected candidate object;
extending (219) the reference pool by adding all approved candidate objects; and
identifying (220) a detected candidate object as being visually similar to the reference objects only if the extended reference pool contains a reference object fulfilling a second similarity criterion (C2), which depends on VE similarity and is defined to be fulfilled by two visually similar objects, in relation to the detected candidate object.

2. The method (200) of claim 1, wherein the first similarity criterion (C1) requires fulfilment of

- a first sub-criterion (C1.1) that the reference object (131) shall have at least weak TE similarity and at least weak VE similarity in relation to the detected candidate object; and
- a second sub-criterion (C1.2) that the reference object shall have strong TE similarity or strong VE similarity, or both of these, in relation to the detected candidate object,

wherein said strong TE similarity represents a relatively stronger degree of similarity than said weak TE similarity, and said strong VE similarity represents a relatively stronger degree of similarity than said weak VE similarity, such that any pair of objects which are strongly TE-similar are also weakly TE-similar, and any pair of objects which are strongly VE-similar are also weakly VE-similar, but the inverse of each implication is false.

3. The method (200) of claim 2, wherein:

the reference object shall be deemed to have at least weak TE similarity in relation to the detected candidate object if its TE distance to the detected candidate object is below a first TE threshold;
the reference object shall be deemed to have strong TE similarity in relation to the detected candidate object if its TE distance to the detected candidate object is below a second TE threshold; and
the first TE threshold is greater than the second TE threshold.

4. The method (200) of claim 2 or 3, wherein:

the reference object shall be deemed to have at least weak VE similarity in relation to the detected candidate object if its VE distance to the detected candidate object is below a first VE threshold;

the reference object shall be deemed to have strong VE similarity in relation to the detected candidate object if its VE distance to the detected candidate object is below a second VE threshold; and

the first VE threshold is greater than the second VE threshold.

5. The method (200) of claim 3 or 4, wherein the TE distance is a function of cosine distance in TE space and/or the VE distance is a function of cosine distance in VE space.

6. The method (200) of any of the preceding claims, wherein the first similarity criterion and the second similarity criterion refer to representations of the TEs and VEs in latent space.

7. The method (200) of any of claims 2 to 5, which is for identifying objects that are visually similar to the reference objects provided that they are not visually similar to negative reference objects (132), the method further comprising:

forming (215) a negative reference pool (112) consisting of at least one negative reference object (132), which is represented in the negative reference pool as at least one data record;

generating (216) a VE for each of the negative reference objects, which includes applying said one or more neural networks (113, 114) to image data from the regions where the negative reference objects are depicted;

approving (217) a detected candidate object for addition to the negative reference pool only if the negative reference pool contains a negative reference object which has a strong VE similarity in relation to the detected candidate object; and

extending (218) the negative reference pool by adding all approved candidate objects,

wherein a detected candidate object shall be identified (220) as being visually similar to the reference objects unless the extended negative reference pool contains a negative reference object fulfilling a third similarity criterion (C3), which depends on VE similarity and is defined to be fulfilled by two visually similar objects, in relation to the detected candidate object.

8. The method (200) of claim 7, wherein, if a detected candidate object has been approved (214) for addition to the reference pool (111) and if the negative reference pool (112) contains a negative reference object fulfilling the third similarity criterion, then this detected candidate object shall not be approved (217) for addition to the negative reference pool and the approval (214) for addition to the reference pool shall be revoked.

9. The method (200) of any of the preceding claims, wherein the second similarity criterion (C2) and, as the case may be, the third similarity criterion (C3) are independent of TE similarity.

10. The method (200) of any of the preceding claims, wherein each visually similar candidate object is identified (220) in terms of an indication of the region where it is depicted.

11. The method (200) of any of the preceding claims, wherein the detection (213) of the candidate objects is performed by means of an object-detection algorithm.

12. The method (200) of any of the preceding claims, wherein the extension (219) of the reference pool is performed after completion of the approving (214) for addition to the reference pool.

13. The method (200) of any of the preceding claims, wherein the approving (214) for addition to the reference pool and the extension (219) of the reference pool are performed concurrently.

14. An image processing device (100) comprising:

an input interface (110) for receiving a set of images (130) and an indication of regions in the set of images where a plurality of reference objects (131) are depicted;

a reference pool memory (111) suitable for storing data records relating to one or more objects;

one or more neural networks (113, 114) operable to generate a text embedding (TE) and a visual embedding (VE) for an object depicted in a region of an image, based on image data from the image region;

an object detection component (115) operable to detect objects in an image;

an output interface (116) for indicating one or more objects which are visually similar to said reference objects; and

processing circuitry (117) configured to perform the method (200) of any of claims 1 to 13.

**15.** A computer program (119) comprising instructions which, when the program is executed by a computer, cause the computer to carry out the method (200) of any of claims 1 to 13.

Fig. 1

*200*

Receive reference objects — 210

Form reference pool — 211

Generate TEs and VEs — 212

Detect candidate objects — 213

Approve for
addition to reference pool — 214

Form negative reference pool — 215

Generate VEs — 216

Approve for addition
to negative reference pool — 217

Extend negative reference pool — 218

Extend reference pool — 219
Select best matches — 219.1

Identify visually similar objects — 220

Receive user feedback — 221

*Fig. 2*

TE space

VE space

*Fig. 3*

TE space

VE space

C1.1

C1.2

*Fig. 4*

VE space

Fig. 5

TE space

VE space

C1.1

C1.2

C1.1

C1.2

C1.2

C1.1

Fig. 6

Fig. 7

Fig. 8

## EUROPEAN SEARCH REPORT

**Application Number**

EP 24 20 6337

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 177 225 B1 (CORDOVA-DIBA BERTIN RUDOLPH [US] ET AL) 3 November 2015 (2015-11-03) * column 1, line 13 - line 16 * * column 2, line 19 - line 32 * * column 3, line 28 - line 37 * * column 18, line 42 - line 62 * * column 27, line 7 - line 11 * * column 26, last paragraph * * column 28, line 2 - line 8 * * figure 4C * | 1,4-6, 9-11,14, 15 | INV. G06V10/772 G06V10/764 G06V10/774 G06V10/82 G06N3/045 G06V10/22 G06V10/74 |
| A | BARSELLOTTI LUCA ET AL: "FOSSIL: Free Open-Vocabulary Semantic Segmentation through Synthetic References Retrieval", 2024 IEEE/CVF WINTER CONFERENCE ON APPLICATIONS OF COMPUTER VISION (WACV), 3 January 2024 (2024-01-03), pages 1453-1462, XP034583256, IEEE, Piscataway, NJ, USA DOI: 10.1109/WACV57701.2024.00149 [retrieved on 2024-04-09] * Section 3. * * figure 1 * | 1-4,6, 9-11,14, 15 | |
| A | US 2021/365719 A1 (KALYUZHNER ZEEV [IL] ET AL) 25 November 2021 (2021-11-25) * paragraph [0011] * * figure 2 * | 1,2,4-6, 9,10, 12-15 | |
| A | GONCA YILMAZ ET AL: "OpenDAS: Open-Vocabulary Domain Adaptation for Segmentation", ARXIV.ORG, CORNELL UNIVERSITY LIBRARY, 10 October 2024 (2024-10-10), XP091899597, 201 OLIN LIBRARY CORNELL UNIVERSITY ITHACA, NY 14853 * figure 2 * | 1,6-11, 14,15 | |

**TECHNICAL FIELDS SEARCHED (IPC)**

G06N
G06V

The present search report has been drawn up for all claims

| Place of search | Date of completion of the search | Examiner |
|---|---|---|
| The Hague | 11 February 2025 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P4C01)

**ANNEX TO THE EUROPEAN SEARCH REPORT
ON EUROPEAN PATENT APPLICATION NO.**

EP 24 20 6337

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2025

| Patent document cited in search report | | Publication date | Patent family member(s) | | Publication date |
|---|---|---|---|---|---|
| US 9177225 | B1 | 03-11-2015 | TW | 201612780 A | 01-04-2016 |
| | | | US | 9177225 B1 | 03-11-2015 |
| | | | US | 2016042250 A1 | 11-02-2016 |
| | | | US | 2016042251 A1 | 11-02-2016 |
| | | | WO | 2016004330 A1 | 07-01-2016 |
| US 2021365719 | A1 | 25-11-2021 | EP | 3910549 A1 | 17-11-2021 |
| | | | IL | 274559 A | 01-12-2021 |
| | | | US | 2021365719 A1 | 25-11-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DOSOVITSKIY et al.** An Image is Worth 16×16 Words: Transformers for Image Recognition at Scale. *arXiv:2010.11929 [cs.CV*
- **ZHOU et al.** Detecting Twenty-thousand Classes using Image-level Supervision. *arXiv:2201.02605 [cs.CV*
- **ZANG et al.** Open-Vocabulary DETR with Conditional Matching. *arXiv:2203.11876 [cs.CV*
- **SHI et al.** *EdaDet: Open-Vocabulary Object Detection Using Early Dense Alignment*, https://chengshiest.github.io/edadet
- **OQUAB et al.** DINOv2: Learning Robust Visual Features without Supervision. *arXiv:2304.07193 [cs.CV*
- **LIU et al.** Swin Transformer: Hierarchical Vision Transformer using Shifted Windows. *arXiv:2103.14030 [cs.CV*
- **REN et al.** Faster R-CNN: Towards Real-Time Object Detection with Region Proposal Networks. *arXiv:1506.01497 [cs.CV*